(19) Europäisches Patentamt / European Patent Office / Office européen des brevets

(11) **EP 2 873 723 A1**

(12) **EUROPEAN PATENT APPLICATION**

(43) Date of publication:
**20.05.2015 Bulletin 2015/21**

(51) Int Cl.:
***C11D 3/38*** *(2006.01)*     ***C11D 3/39*** *(2006.01)*
***C02F 1/461*** *(2006.01)*     ***B08B 3/08*** *(2006.01)*
***C11D 7/04*** *(2006.01)*

(21) Application number: **13193329.3**

(22) Date of filing: **18.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Clean 4U Sweden AB**
**343 31 Älmhult (SE)**

(72) Inventor: **Boysuren, Birsen**
**343 31 Älmhult (SE)**

(74) Representative: **Reyier, Ann-Mari**
**Swea-IP-Law AB**
**Box 44**
**151 21 Södertälje (SE)**

(54) **A new composition for use as a cleaning agent**

(57) The present invention relates to a composition for use as a cleaning agent, comprising component a, which is anolyte, and component b, which is a lactic acid bacteria belonging to the genus *Lactobacillus.* The invention further relates to a method for cleaning a surface and a method for delaying regrowth of microbes, and a method for reducing the number of resistant microbes on a surface, whereby the method comprises applying the composition according to the invention on a surface, and optionally removing said composition from the surface.

**Description**

Field of the invention

The present invention relates to a composition for use as a cleaning agent, comprising component a, which is anolyte, and component b, which is a lactic acid bacteria belonging to the genus *Lactobacillus.* The invention further relates to a method for cleaning a surface and a method for delaying regrowth of microbes, and a method for reducing the number of resistant microbes on a surface, whereby the method comprises applying the composition according to the invention on the surface, and optionally removing said composition from the surface.

Background of the invention and prior art

Many cleaning products are available for cleaning surfaces such as floors. Apart from removing dust and dirt these products preferably also remove microbes, such as bacteria. This is especially important in buildings such as hospitals and laboratories.

A general problem with cleaning of surfaces is that microbes cannot be removed permanently, because the few microbes that are still present after cleaning grow back in numbers. Usually it takes about two minutes after cleaning for microbes to cover the surface again. In order to prevent contagion and illnesses, the surfaces must be cleaned regularly. In hospitals, for example, cleaning need to be performed about every four hours.

Microbes become increasingly resistant to cleaning products. As a consequence, these resistant microbes remain on the cleaned surface and quickly increase in numbers after cleaning. Because more and more microbes become resistant to cleaning products, the risks for contagion and illnesses increase. Consequently, in order to prevent this increase, the costs for cleaning of surfaces increases.

Examples of cleaning agents that also have an anti-microbial function are so called anolyte solutions or anolytes. Anolyte can be describes as a positively charged portion of a saline solution that has been split into its ionic components.

Cloete T.E. et al, J. of Applied Microbiology, 107 (2009) 379-384, disclosed the use of anolyte in the treatment of *Pseudomonas aerugina* and *Escherichia coli.*

WO 2003/045446 also discloses the use of anolyte for treatment and management of microbes such as *Escherichia coli.*

Although anolyte is known to be useful as a preservative in beverages, water tanks and food product, its efficiency for cleaning surfaces has not been well documented. Anolyte and other chemical anti-microbe cleaning agents are not effective in preventing or reducing regrowth of microbes on surfaces after cleaning, especially not against the regrowth of resistant bacteria. As mentioned above, it takes about two minutes for the harmful microbes to cover the cleaned surfaces again. Another disadvantage of anolyte is that its effectiveness is reduced by the presence of proteins, because chlorine reacts with proteins (i.e. bacteria). Further, anolyte is not effective as disinfectant against resistant bacteria such as E. coli.

Environmentally friendly cleaning agents become increasingly popular. Some of these agents or products contain so called good-microbes, such as *Lactobacillus Acidophilus.*

US 5,269,959 discloses a cleaning product for use on human skin comprising a mixture of components including the bacteria *Lactobacillus Acidophilus.*

EP 1326954 discloses a composition for use in cleaning surfaces comprising *Bacillus* bacteria together with enzymes and enzyme activators, surfactants, neutralizers and stabilizer.

DE 4428624 discloses a cleaning and disinfection composition comprising *Lactobacillus* bacteria and yeast together with metals, whereby the composition has an acid pH between 2 and 5.

Biotechnical cleaning agents that can be used for cleaning surfaces, such as floors, are being sold on the market, e.g. Nu-Action-3™ from Innu-Science AB. This product comprises the bacteria *Lactobacillus.*

The known cleaning agents are not effective and efficient in preventing or delaying regrowth of microbes on surfaces after cleaning said surfaces. Some of the known agents are rather expensive. Other cleaning agents have such a low a pH that certain surfaces, such as linoleum, would be damaged by the use of such cleaning agents.

There is a need for a cleaning composition that removes microbes, especially resistant microbes, more effectively. There is a need for a cleaning composition that reduces the incidence and intensity of microbial resistance. There is also a need for a cleaning composition that reduces the need for frequent cleaning of a surface. There is even a need for a cleaning composition that delays the regrowth of microbes on a surface. There is a need for a composition, which reduces costs for cleaning of a surface. The new cleaning composition is preferably environmentally friendly in use. Preferably, the new composition can be manufactured at low cost. The new composition can preferably be used on all types of surfaces irrespective of the material of the surface, e.g. plastic, wood, etc..

Summary of the invention

It is an object of the present invention to overcome the above mentioned problems, and to provide a composition for use as a cleaning agent.

This object is achieved by a composition as defined in claim 1 comprising
component a, which is anolyte, and
component b, which comprises one or more lactic acid bacteria belonging to the genus *Lactobacillus.*

The cleaning composition according to the invention removes microbes, especially resistant microbes, efficiently and effectively. The composition according to the invention is expected to be efficient and effective in delaying the regrowth of microbes on a surface. The new cleaning composition is thus believed to reduce the incidence and intensity of microbial resistance. Because of the advantageous cleaning effect of the composition according to the invention, the need for frequent cleaning of a surface reduces. This in turn reduces costs for cleaning of a surface.

The ingredients used in the composition of the invention are environmentally friendly. The ingredients are also relatively inexpensive. The manufacturing costs are therefore relatively low. Further, the composition can be used on all types of surfaces.

In one embodiment, the lactic acid bacteria in component b is selected from the group comprising *Lactobacillus acidophilus, Lactobacillus casei, Lactobacillus plantarum, Lactobacillus bulgaricus, Lactobacillus paracasei paracasei, Lactobacillus alimentarius, Lactobacillus farciminis, Lactobacillus brevis, Lactobacillus delbruerkii, Lactobacillus buchneri, Lactobacillus fermentum, Lactobacillus fructivorans, Bifidobacterium bifidum* and *Bifidobacterium infantis,* or mixture thereof. In a further embodiment, the lactic acid bacterium in component b is *Lactobacillus acidophilus.*

In another embodiment, component b comprises a number of bacteria that is sufficient to compete for space and nutrition on a surface with other microbes present on said surface.

An advantage of the present invention is that "good" bacteria are applied to a surface. These harmless bacteria occupy space and use any nutrition present on the surface. As a consequence, the harmful and "bad" microbes cannot grow, or can only grow to a minor extent, on the surface, because of lack of space and/or nutrition present on the surface.

In a further embodiment, composition b is in a liquid form and the colony-forming unit per milliliter is at least 50 CFU/ml.

The exact number of bacteria may vary and depend on the specific bacteria used in component b, or on the condition of the surface that needs to be cleaned. The number may also vary dependent on the requirements for cleaning, which are different in for example hospitals compared to floors in shopping malls.

In another embodiment, component b comprises an aqueous solution comprising one or more lactic acid bacteria belonging to the genus *Lactobacillus,* together with one or more adjuvant or diluent, such as stabilizer, solubilizer, surfactant and/or anti-oxidant.

In a further embodiment, the one or more adjuvant or diluent are selected from {[3(dodecanoylamino)propyl] (dimethyl)ammonio}acetate, $C_{12}$-$C_{16}$-alcohol ethoxylates, and sodium acetate.

In one embodiment, composition b has a pH of about 7.4.

In one embodiment, component a comprises
at least 99 wt% water,
at the most 1 wt% potassium chloride,
less than 250 ppm oxidants,
less than 180 ppm hypochlorous acid,
less than 30 ppm hypochlorite ion,
less than 5 ppm ozone, and
less than 5 ppm chlorine dioxide, and
wherein component a has a pH between 6 and 8, and a redox potential between 600 and 900 mV, and, wherein weight percentage (wt%) is the weight percentage of the total weight of component a, and part per million (ppm) is a part of a total of million parts present in component a.

In another embodiment the composition comprises

- component a, which is an anolyte solution comprising

at least 99. 5 wt% water,
at the most 0.5 wt% potassium chloride,
less than 200 ppm oxidants,
less than 170 ppm hypochlorous acid,
less than 25 ppm hypochlorite ion,
less than 2.5 ppm ozone, and
less than 2.5 ppm chlorine dioxide, and

wherein component a has a pH between 6.5 and 8, and a redox potential between 600 and 900 mV, and

- component b, which is an aqueous solution comprising one or more *Lactobacillus* bacteria having a colony-forming units per milliliter of at least 50 CFU/ml, {[3-(dodecanoylamino)propyl](dimethyl)ammonio}acetate between 1 and 5 wt%, $C_{12}$-$C_{16}$-alcohol ethoxylates between 5 and 10 wt%,
  sodium acetate between 0.001 and 1 wt%, and
  wherein component b has a pH of about 7.4, and

wherein weight percentage (wt%) is the weight percentage of the total weight of component a or b, and part per million (ppm) is a part of a total of million parts present in component a.

The objects of the invention are also achieved by a use of the composition, as defined above, as a cleaning agent. One embodiment relates to a use of the composition, as defined above, as a disinfectant. Another embodiment relates to a use for the composition, as defined above, for cleaning a surface where microbes are present and where microbial decontamination is required. One embodiment relates to a use of the composition, as defined above, for delaying regrowth of microbes after cleaning the surface with said composition. Another embodiment relates to a use of the composition, as defined above, for reducing the number of resistant microbes on the surface.
In one embodiment, the microbe is *Escherichia coli.*

The objects of the invention are achieved by a method for cleaning a surface comprising, applying the composition, as defined above, on the surface, and optionally removing said composition from the surface.

Another embodiment relates to a method for reducing a number of microbes on a surface comprising, applying the composition, as defined above, on the surface, and optionally removing said composition from the surface.

One embodiment relates to a method for delaying regrowth of microbes on a surface comprising, applying the composition, as defined above, on the surface, and optionally removing said composition from the surface.

In one embodiment of the methods, the microbe is a resistant microbe. In a further embodiment, the microbe is *Escherichia coli.*

Another embodiment relates to a method for reducing a number of microbes on a surface by applying the composition, as defined above, on the surface, two or three times a day.

Detailed description of various embodiments of the invention

A composition of the present invention is useful as a cleaning agent, especially for cleaning surfaces. A surface is to be interpreted in the broadest sense and may include, without limitation, floor, wall and other side, edge or border of a structure, such as building, furniture, and equipment such as apparatus, gear, tool and other utensils. Cleaning may include, without limitation, washing, scrubbing, scouring, wiping, cleansing, dusting, vacuuming, laundering, mopping, polishing, and the like. The composition may also be useful for cleaning or treatment of skin of mammals, such as animals and humans.

The composition comprises component a, which is anolyte, and component b, which is a lactic acid bacteria belonging to the genus *Lactobacillus.* In one embodiment the composition consists of component a and component b.

Component a is electrolyzed water. Anolyte may be prepared by adding a saturated solution of sodium chloride (or potassium chloride or magnesium chloride) in water to a basin, The basin comprises a positively charged and a negatively charged electrode that are separated by a membrane or diaphragm. A current passes through the electrolyzed water. A voltage between the electrodes may be set between 7 and 11 amperes and between 8 and 11 volts, respectively. The solution is being electrolyzed until the indicators for amperes, voltage and pH are stabilized. The result is two types of water that exhibit different properties. The two types of water can be collected from their respective outlets. One type is an electrolyzed basic solution from the cathode stream having a pH over 7.4, or between 10 and 12. The other type is an electrolyzed acid solution from the anode stream having a pH below 7.4. This second type of electrolyzed water has anti-microbial functionality.

Component a may comprise the following ingredients;

- at least 99 weight percentage (wt%), or at least 99.5 wt%, or at least 99.75 wt% water, and
- at least 1 wt% , or at least 0.5 wt%, or at least 0.30, or at least 0.25 wt% potassium chloride. Weight percentages are the weight percentage of the total weight of the solution.

Component a may further comprise

- less than 250 ppm, or less than 200 ppm oxidants,
- less than 180 ppm, or less than 170 ppm hypochlorous acid,
- less than 30 ppm, or less than 25 ppm hypochlorite ion,

- less than 5 ppm, or less than 2.5 ppm ozone, and
- less than 5 ppm, or less than 2.5 ppm chlorine dioxide.

A part per million (ppm) is a part of a total of million parts present in component a.

The solution of component a has a pH below 8.5, or below 7.5 or between 6 and 8, or between 6.5 and 7.5, or about 7.0, and a redox potential (ORP) between 550 and 950, or between 600 and 900, or between 700 and 800, or about 750 mV.

Component a is stable for at least two years under normal atmospheric pressure and at room temperature (15 to 25°C).

Component b comprises one or more lactic acid bacteria belonging to the genus *Lactobacillus (Lactobacillus). Lactobacillus* species can be divided into three groups:

1) bligately homofermentative (Group I), such as *Lactobacillus acidophilus, Lactobacillus delbrueckii, Lactobacillus helveticus, Lactobacillus salivarius,*

2) facultatively heterofermentative (Group II), such as *Lactobacillus casei, Lactobacillus curvatus, Lactobacillus plantarum, Lactobacillus sakei,* and

3) obligately heterofermentative (Group III), such as *Lactobacillus brevis, Lactobacillus buchneri, Lactobacillus fermentum, Lactobacillus reuteri.*

Component b may comprise bacteria from any of these groups, or mixtures thereof. Other examples of such bacteria, but not limited thereto, are *Lactobacillus animalis, Lactobacillus amylolyticus, Lactobacillus gallinarum, Lactobacillus bulgaricus, Lactobacillus paracasei paracasei, Lactobacillus alimentarius, Lactobacillus farciminis, Lactobacillus equi, Lactobacillus gasseri, Lactobacillus mucosae, Lactobacillus rhamnosus, Lactobacillus fructivorans, Bifidobacterium bifidum* and *Bifidobacterium infantis,* or mixtures thereof. A preferred lactic acid bacterium is *Lactobacillus acidophilus.*

Component b may be in solid form or in liquid form. A solid form may for example be freeze dried bacteria. The preferred form is a liquid form, whereby the bacteria are dissolved in an aqueous solution. This solution may be a buffered aqueous solution. The solution may further comprise ingredients that are needed for the survival of the bacteria and ingredients needed to stabilize the solution. Examples of adjuvants and diluents may be stabilizers, solubilizers, carriers, anionic or nonionic surfactants, sugars such as saccharide or fructose. Examples of adjuvants and diluents may be {[3-(dodecanoylamino)propyl](dimethyl)ammonio}acetate and $C_{12}$-$C_{16}$-alcohol ethoxylates as surfactants, and sodium acetate.

Component b comprises an amount or a number of bacteria that is sufficient to compete with other microbes for space and nutrition on a surface, and thereby reduce the growth and/or delay regrowth of other microbes, especially resistant microbes. Composition b may have a colony-forming units (CFU) per milliliter of at least 50 CFU/ml, or at least 100 CFU/ml, at least 250 CFU/ml or between 50 and $10^8$ CFU/ml, or between 100 and $10^6$ CFU/ml.

The pH of composition b is such that the bacteria stay alive in the solution. The pH is preferably between 6.5 and 9, or between 7 and 8, or between 7.3 and 7.8, or about 7.4.

The present invention includes any combination of any alternative mentioned.

The composition of the invention can be used for cleaning a surface, i.e. to remove microbes from the surface by cleaning said surfaces with the composition of the invention. The composition can also be used for delaying regrowth of microbes after cleaning a surface with said composition. The composition can be used to delay regrowth of microbes by 50%, at least 10 minutes after cleaning the surface with the composition of the invention. The composition of the invention can be used for reducing the number of resistant microbes on a surface.

One method of cleaning a surface, or a method for reducing the number of (resistant) microbes on a surface, or a method for delaying regrowth of microbes, especially resistant microbes, such as *E. coli,* may comprise a first step of applying the composition of the invention on the surface, preferably a surface where microbes are present and where microbial decontamination is required.

The component a and component b may be applied on the surface simultaneously or subsequently. When the components are applied subsequently, they should preferably be applied within a time frame of one, two, three, four or five minutes.

The surface to be cleaned may be wetted with or soaked in a solution comprising component a (anolyte). Than, component b, in solid form or in liquid form, can be spread over the wet/soaked surface.

Alternatively, a material, e.g. a fabric or cloth, may be wetted with component a and than component b may be applied to the material, either by covering, e.g. spraying, a solid form, such as powder, over the material, or by wetting the material again with a solution comprising component b.

In a further alternative method a material may be wetted with component a, whereafter component b, in solid form or in liquid form, is spread over the surface.

The composition may be allowed to dry on the surface. Not removing the applied composition will have the desired effect of the composition on the surface, while costs for cleaning can be reduced further because no addition removal step needs to be performed.

Optionally, in a second step of the method, the composition is removed from the surface, e.g. by wiping the surface with a material, such as a cloth or rag or duster.

The method is performed at room temperature and at atmospheric pressure (about 1 bar or 100 kPa).

In one embodiment of the method the composition used comprises

- component a, which is an anolyte solution comprising

    at least 99.7 wt% water,
    at the most 0.3 wt% potassium chloride,
    less than 200 ppm oxidants,
    less than 170 ppm hypochlorous acid,
    less than 25 ppm hypochlorite ion,
    less than 2.5 ppm ozone, and
    less than 2.5 ppm chlorine dioxide, and

    wherein component a has a pH of 7.0 $\pm$ 0.5, and a redox potential of 750 $\pm$ 150 mV, and

- component b, which is an aqueous solution comprising one or more *Lactobacillus* bacteria having a colony-forming units per milliliter of at least 50 CFU/ml, {[3-(dodecanoylamino)propyl](dimethyl)ammonio}acetate between 1 and 5 wt%, $C_{12}$-$C_{16}$-alcohol ethoxylates between 5 and 10 wt%,
    sodium acetate between 0.001 and 1 wt%, and
    wherein component b has a pH of about 7.4, and

wherein weight percentage (wt%) is the weight percentage of the total weight of component a or b, and part per million (ppm) is a part of a total of million parts present in component a.

The above mentioned method is especially suitable for removing microbes or delaying regrowth of resistant microbes, such as *E. coli.* The method may be used to reduce the regrowth of a resistant microbe by at least 50%. The number of microbes may be reduced for a period of at least four hours. The composition of the present invention and the methods described above can be used for cleaning a surface twice a day. Alternatively, the surface may be cleaned three times a day. The composition of the invention is especially suitable for use in cleaning surfaces in hospitals or laboratories.

**Experimental**

*Materials*

Component a, which is an anolyte solution comprising

    99.75 wt% water, which may be tap water or distilled water,
    0.25 wt% potassium chloride,
    less than 200 ppm oxidants,
    less than 170 ppm hypochlorous acid,
    less than 25 ppm hypochlorite ion,
    less than 2.5 ppm ozone, and
    less than 2.5 ppm chlorine dioxide.

The solution had a pH of 7.0 $\pm$ 0.5, and a redox potential (ORP) of 750 $\pm$ 150 mV.

Component b, which is an aqueous solution comprising *Lactobacillus* in water, may further comprise adjuvants or diluents, such as saccharides, stabilizers and surfactants such as {[3-(dodecanoylamino)propyl](dimethyl)ammonio} acetate 1 - 5 wt%, $C_{12}$-$C_{16}$-alcohol ethoxylates 5 - 10 wt%, and sodium acetate 0.001- 1 wt%. *Lactobacillus* is present in a number of at least 50 CFU/ml.

*E. coli* solution, which is an aqueous solution of *Escherichia coli* (*E. coli*) comprising at least 10 CFU/ml.

Control liquid 1, which is distilled water.
Control liquid 2, which is a household cleaning liquid comprising soap.

Contact plates to facilitate easy and reproducible surface microbial testing. The plates typically contain Tryptic Soy Agar with Lecithin and Polysorbate 80 added to inactivate residual disinfectants. The contact plates were incubated at 36°C for 24 hours. CFU was calculated manually (n=4). A completely covered contact plate was reported as a value of > 300 CFU/ml.

*Calculation*

Calculating reduction in numbers of microbes on the contact plate;

$$\text{Reduced microbes (\%)} = 100 - (100 \times (CFU_{average}/CFU_{base\ value}))$$

The number of microbes present on a contact plate after adding 30 µl of the *E. coli* solution was taken as a base value.

*Experiment 1*

30 µl of the *E. coli* solution was spread over the contact plates and allowed to dry for 5 to 55 minutes. Subsequently, 30 µl of a test solution or a control liquid was spread over the contact plate. The numbers of bacteria, E. coli or Lactobacillus, were counted at 0 or 5 seconds or at 10 minutes after addition of the test solution or control liquid.

Table 1, immediate effect.

| Component a | Component b | Time of sampling | Bacteria | CFU/ml |
|---|---|---|---|---|
| - | - | 0 (s) | *E. coli* | > 300 |
| yes | - | 5 (s) | *E. coli* | 0 |
| yes | yes | 0 (s) | *Lactobacillus* | > 300 |
| yes | yes | 0 (s) | *E. coli* | 41 |
| yes | yes | 10 (min) | *Lactobacillus* | > 300 |
| yes | yes | 10 (min) | *E. coli* | 0 |

| Control liquid 1 | Control liquid 2 | Time of sampling | Bacteria | CFU/ml |
|---|---|---|---|---|
| yes | - | 0 (s) | *Lactobacillus* | 0 |
| - | yes | 0 (s) | *E. coli* | 0 |

*Experiment 2*

30 µl of a test solution or a control liquid was spread over the contact plate and allowed to dry for 10 minutes. Subsequently, 30 µl of the *E. coli* solution was spread over the contact plates. The numbers of bacteria, E. coli or Lactobacillus, were counted at 0 seconds or at 10 minutes after addition of the *E. coli* solution.

Table 2, prolonged effect.

| Component a | Component b | Time of sampling | Bacteria | CFU/ml |
|---|---|---|---|---|
| yes | yes | 0 (s) | *Lactobacillus* | > 300 |
| yes | yes | 0 (s) | *E. coli* | > 300 |
| yes | yes | 10 (min) | *Lactobacillus* | > 300 |
| yes | yes | 10 (min) | *E. coli* | 150 |

Table 3, Reduction of *E. coli,* immediate effect.

| Component a | Component b | Time of sampling | Reduction *E. coli*(%) |
|---|---|---|---|
| yes | - | 5 (s) | 100 |
| yes | yes | 0 (s) | ≥ 86 |
| yes | yes | 10 (min) | 100 |
| | | | |
| Control liquid 1 | Control liquid 2 | Time of sampling | Reduction *E. coli* (%) |
| yes | - | 0 (s) | 100 |
| - | yes | 0 (s) | 100 |

Table 4. Reduction of *E. coli,* prolonged effect.

| Component a | Component b | Time of sampling | Reduction *E. coli (%)* |
|---|---|---|---|
| yes | yes | 10 (min) | >50 |

The results show that the numbers of E. coli bacteria are reduced by 86 % immediately (0 seconds) after applying the composition of the present invention to the contact plate that was incubated with *E. coli* bacteria. The numbers of *E. coli* bacteria are reduced by 100 % 5 seconds after applying the composition of the present invention to the contact plate.

The results also show that the composition of the present invention reduces the numbers of microbes, such as *E. coli* bacteria, by more than 50% on a surface that was first cleaned with said composition and than incubated with microbes.

These results show that the composition of the present invention is effective in removal of (resistant) microbes, such as *E. coli.* The results especially show that the composition of the present invention is effective in delaying regrowth of (resistant) microbes, such as *E. coli,* after the surface has been cleaned with said composition. This effect will reduce costs for cleaning surfaces. It will also reduce the risk for contagion and illnesses caused by microbes.

*Definitions*

The term "distilled water" as used herein, means water clean from dissolved and suspended substances such as metal salts and microorganisms which are present in common, undistilled water. Distillation involves boiling the water and transfer to the vapor phase, after which the steam is condensed into a clean container.

The term "microbe" as used herein, means a microscopic organism, which may be a single cell or multicellular organism, including all of the prokaryotes, namely the bacteria and archaea; and all forms of eukaryotes, comprising the protozoa, fungi, algae, microscopic plants (green algae), and animals such as rotifers and planarians, as well as viruses.

The term "resistant" as used herein, means an ability of a microbe to survive after exposure to one or more cleaning agent, or antibiotics or antiviral agent.

The wording "between" as used herein includes the mentioned values and all values in between these values. Thus, a value between 10 and 40 μl includes 1 μl, 1.654 μl and 2 μl.

The present invention is not limited to the embodiments disclosed but may be varied and modified within the scope of the following claims.

**Claims**

1. A composition for use as a cleaning agent, comprising
   component a, which is anolyte, and
   component b, which is one or more lactic acid bacteria belonging to the genus *Lactobacillus.*

2. The composition according to claim 1, wherein the lactic acid bacteria in component b is selected from the group comprising *Lactobacillus acidophilus, Lactobacillus casei, Lactobacillus plantarum, Lactobacillus bulgaricus, Lacto-*

8

*bacillus paracasei paracasei, Lactobacillus alimentarius, Lactobacillus farciminis, Lactobacillus brevis, Lactobacillus delbruerkii, Lactobacillus buchneri, Lactobacillus fermentum, Lactobacillus fructivorans, Bifidobacterium bifidum* and *Bifidobacterium infantis,* or mixture thereof.

3. The composition according to claim 1 or 2, wherein composition b comprises a number of bacteria that is sufficient to compete for space and nutrition on a surface with other microbes present on said surface.

4. The composition according to claim 3, wherein composition b is in a liquid form and the colony-forming units per milliliter is at least 50 CFU/ml.

5. The composition according to any one of claims 1 to 4, wherein component b comprises an aqueous solution comprising one or more lactic acid bacteria belonging to the genus *Lactobacillus,* together with one or more adjuvant or diluent, such as stabilizer, solubilizer, surfactant and/or anti-oxidant.

6. The composition according to claim 5, wherein the one or more adjuvant or diluent are selected from {[3-(dodecanoylamino)propyl](dimethyl)ammonio}acetate, $C_{12}$-$C_{16}$-alcohol ethoxylates, and sodium acetate.

7. The composition according to any one of claims 1 to 6, wherein component b has a pH of about 7.4.

8. The composition according to any one of claims 1 to 7, wherein component a comprises

- at least 99 wt% water,
- at the most 1 wt% potassium chloride,
- less than 250 ppm oxidants,
- less than 180 ppm hypochlorous acid,
- less than 30 ppm hypochlorite ion,
- less than 5 ppm ozone, and
- less than 5 ppm chlorine dioxide, and

wherein component a has a pH between 6 and 8, and a redox potential between 600 and 900 mV.

9. The composition according to any one of claims 1 to 8, wherein the composition comprises

- component a, which is an anolyte solution comprising
at least 99. 5 wt% water,
at the most 0.5 wt% potassium chloride,
less than 200 ppm oxidants,
less than 170 ppm hypochlorous acid,
less than 25 ppm hypochlorite ion,
less than 2.5 ppm ozone, and
less than 2.5 ppm chlorine dioxide, and
wherein component a has a pH between 6.5 and 8, and a redox potential between 600 and 900 mV, and
- component b, which is an aqueous solution comprising one or more *Lactobacillus* bacteria having a colony-forming units per milliliter of at least 50 CFU/ml, {[3-(dodecanoylamino)propyl](dimethyl)ammonio}acetate between 1 and 5 wt%, $C_{12}$-$C_{16}$-alcohol ethoxylates between 5 and 10 wt%,
sodium acetate between 0.001 and 1 wt%, and
wherein component b has a pH of about 7.4.

10. Use of the composition according to any one of claims 1 to 9 as a cleaning agent.

11. Use of the composition according to any one of claims 1 to 9 for cleaning a surface where microbes are present and where microbial decontamination is required.

12. A method for reducing the number of microbes on a surface comprising, applying the composition according to any one of claims 1 to 9 on the surface, and optionally removing said composition from the surface.

13. A method for delaying regrowth of microbes on a surface comprising, applying the composition according to any one of claims 1 to 9 on the surface, and optionally removing said composition from the surface.

**14.** A method for reducing a number of microbes on a surface by applying the composition according to any one of claims 1 to 9 on the surface, two or three times a day.

**15.** The method according to any one of claims 12 to 14, wherein the microbe is a resistant microbe, such as *Escherichia coli.*

**Europäisches Patentamt**
**European Patent Office**
**Office européen des brevets**

# EUROPEAN SEARCH REPORT

Application Number

EP 13 19 3329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Eugene Cloete: "Electrochemically Activated water as a non-polluting anti-fouling technology", Corrosion 2002, NACE International Paper 02463, 1 January 2002 (2002-01-01), pages 1-4, XP055110889, Retrieved from the Internet: URL:http://www.zapwatertechnology.com/yahoo_site_admin/assets/docs/nonpollution.9161601.pdf [retrieved on 2014-03-31] * the whole document * | 1-15 | INV. C11D3/38 C11D3/39 C02F1/461 B08B3/08 C11D7/04 |
| Y,D | US 5 269 959 A (SCHREIBMAN GARY [US]) 14 December 1993 (1993-12-14) * the whole document * | 1-15 | |
| Y | AROUTCHEVA A ET AL: "DEFENSE FACTORS OF VAGINAL LACTOBACILLI", AMERICAN JOURNAL OF OBSTETRICS & GYNECOLOGY, MOSBY, ST LOUIS, MO, US, vol. 185, no. 2, 1 August 2001 (2001-08-01), pages 375-379, XP008034568, ISSN: 0002-9378, DOI: 10.1067/MOB.2001.115867 * abstract * | 1-15 | |

TECHNICAL FIELDS SEARCHED (IPC)

C11D
C02F
B08B

-/--

The present search report has been drawn up for all claims

| Place of search | Date of completion of the search | Examiner |
|---|---|---|
| The Hague | 3 April 2014 | Moonen, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 13 19 3329

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EVA M SÖDERLING ET AL: "Probiotic Lactobacilli Interfere withBiofilm Formation In Vitro", CURRENT MICROBIOLOGY, SPRINGER-VERLAG, NE, vol. 62, no. 2, 11 September 2010 (2010-09-11), pages 618-622, XP019873919, ISSN: 1432-0991, DOI: 10.1007/S00284-010-9752-9 * abstract * | 1-15 | |
| A | SUN JI-LU ET AL: "Efficacy of acidic and basic electrolyzed water in eradicating Staphylococcus aureus biofilm", CANADIAN JOURNAL OF MICROBIOLOGY, vol. 58, no. 4, April 2012 (2012-04), pages 448-454, XP008168553, ISSN: 0008-4166 * abstract * | 1-15 | |
| A | T.E. CLOETE ET AL: "The antimicrobial mechanism of electrochemically activated water against Pseudomonas aeruginosa and Escherichia coli as determined by SDS-PAGE analysis", JOURNAL OF APPLIED MICROBIOLOGY, vol. 107, no. 2, 1 August 2009 (2009-08-01), pages 379-384, XP055110913, ISSN: 1364-5072, DOI: 10.1111/j.1365-2672.2009.04233.x * abstract; tables 1-4 * | 1-15 | **TECHNICAL FIELDS SEARCHED** (IPC) |

-/--

The present search report has been drawn up for all claims

| Place of search | Date of completion of the search | Examiner |
|---|---|---|
| The Hague | 3 April 2014 | Moonen, Peter |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt
European
Patent Office
Office européen
des brevets

**EUROPEAN SEARCH REPORT**

Application Number

EP 13 19 3329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN LU ET AL: "Cleaning in place with onsite-generated electrolysed oxidizing water for water-saving disinfection in breweries", JOURNAL OF THE INSTITUTE OF BREWING, INSTITUTE OF BREWING. LONDON, GB, vol. 118, no. 4, 1 December 2012 (2012-12-01), pages 401-405, XP008168555, ISSN: 0046-9750, DOI: 10.1002/JIB.56 [retrieved on 2013-02-15] * abstract; table 2 * | 1-15 | |
| A | WO 96/20737 A1 (UNIV MONTREAL [CA]; PREVOST ANDRE [CA]; BARBEAU JEAN [CA]; COTE LUDGER) 11 July 1996 (1996-07-11) * abstract; claims 9-11 * | 1-15 | |
| A,D | WO 03/045446 A1 (RADICAL WATERS IP PTY LTD [ZA]; RAWHANI SUHA [ZA]; KIRKPATRICK ROBIN D) 5 June 2003 (2003-06-05) * abstract; claims 1-20 * | 1-15 | |
| A | THORN R M S ET AL: "Electrochemically activated solutions: evidence for antimicrobial efficacy and applications in healthcare environments", EUROPEAN JOURNAL OF CLINICAL MICROBIOLOGY & INFECTIOUS DISEASES, SPRINGER, BERLIN, DE, vol. 31, no. 5, 2 August 2011 (2011-08-02) , pages 641-653, XP035039671, ISSN: 1435-4373, DOI: 10.1007/S10096-011-1369-9 * Abstract; Table 1; Page 5 section Biofilms; Discussion * | 1-15 | TECHNICAL FIELDS SEARCHED (IPC) |

-/--

The present search report has been drawn up for all claims

| Place of search | Date of completion of the search | Examiner |
|---|---|---|
| The Hague | 3 April 2014 | Moonen, Peter |

EPO FORM 1503 03.82 (P04C01)

Europäisches Patentamt

European Patent Office

Office européen des brevets

# EUROPEAN SEARCH REPORT

Application Number

EP 13 19 3329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2012/156491 A1 (ORGANOBALANCE MEDICAL AG [DE]; LANG CHRISTINE [DE]; RAAB ANDREAS [DE];) 22 November 2012 (2012-11-22) * abstract; claims 1-5,14 * ----- | 1-15 | |

TECHNICAL FIELDS SEARCHED (IPC)

The present search report has been drawn up for all claims

| Place of search | Date of completion of the search | Examiner |
|---|---|---|
| The Hague | 3 April 2014 | Moonen, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 2 873 723 A1

### ANNEX TO THE EUROPEAN SEARCH REPORT
### ON EUROPEAN PATENT APPLICATION NO.

EP 13 19 3329

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2014

| Patent document cited in search report | | Publication date | Patent family member(s) | | Publication date |
|---|---|---|---|---|---|
| US 5269959 | A | 14-12-1993 | NONE | | |
| WO 9620737 | A1 | 11-07-1996 | AT | 210469 T | 15-12-2001 |
| | | | AT | 239511 T | 15-05-2003 |
| | | | AU | 701976 B2 | 11-02-1999 |
| | | | AU | 4295796 A | 24-07-1996 |
| | | | CA | 2208785 A1 | 11-07-1996 |
| | | | DE | 69524631 D1 | 24-01-2002 |
| | | | DE | 69524631 T2 | 21-11-2002 |
| | | | DE | 69530709 D1 | 12-06-2003 |
| | | | DE | 69530709 T2 | 19-02-2004 |
| | | | DK | 0800408 T3 | 08-04-2002 |
| | | | EP | 0800408 A1 | 15-10-1997 |
| | | | EP | 1016420 A1 | 05-07-2000 |
| | | | ES | 2169771 T3 | 16-07-2002 |
| | | | ES | 2198844 T3 | 01-02-2004 |
| | | | JP | H10511999 A | 17-11-1998 |
| | | | PT | 800408 E | 31-05-2002 |
| | | | US | 5731275 A | 24-03-1998 |
| | | | US | 5759970 A | 02-06-1998 |
| | | | US | 5942480 A | 24-08-1999 |
| | | | WO | 9620737 A1 | 11-07-1996 |
| WO 03045446 | A1 | 05-06-2003 | AU | 2002342361 A1 | 10-06-2003 |
| | | | WO | 03045446 A1 | 05-06-2003 |
| WO 2012156491 | A1 | 22-11-2012 | CA | 2833937 A1 | 22-11-2012 |
| | | | CN | 103547670 A | 29-01-2014 |
| | | | EP | 2710115 A1 | 26-03-2014 |
| | | | US | 2014065218 A1 | 06-03-2014 |
| | | | WO | 2012156491 A1 | 22-11-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003045446 A
- US 5269959 A
- EP 1326954 A
- DE 4428624

**Non-patent literature cited in the description**

- **CLOETE T.E. et al.** *J. of Applied Microbiology,* 2009, vol. 107, 379-384